# EUROPÄISCHE PATENTANMELDUNG

(11) **EP 0 950 351 A1**
(43) Veröffentlichungstag der Anmeldung: **20.10.1999**
(21) Anmeldenummer: 98810137.4
(22) Anmeldetag: 19.02.1998
(51) Int. Cl.: A01K 5/01, A01K 5/015

(54) **Futtergefäss für Pferde**

(71) Anmelder: Roggen, Christine, 1785 Cressier (CH)
(72) Erfinder: Roggen, Christine, 1785 Cressier (CH)
(74) Vertreter: BOVARD AG - Patentanwälte

(57) **Zusammenfassung**

Der Erfindung liegt die Aufgabe zugrunde, ein Mittel vorzuschlagen, mit dem die Aufnahme von konzentrierter Nahrung wie Getreideprodukte oder Kraftfutter durch ein Pferd wirkungsvoll verzögert werden kann, ohne dass dazu Antriebs- und Steuerungsmittel benötigt werden. Die Aufgabe wird durch ein Futtergefäss gelöst, das aus einem oben offenen Behälter (1) zur Aufnahme des Futters besteht, in welchem ein mit Öffnungen (10) versehenes flächiges Element (8) auf dem Futter (9) aufliegt. Dadurch wird das Pferd daran gehindert, direkt in das Futter zu beissen und dieses in kurzer Zeit aufzufressen. Durch die im flächigen Element vorhandenen Öffnungen (10) dringt immer nur ein Teil des Futters nach oben, wo es vom Pferd mit Lippen und Zunge aufgenommen wird.

## Beschreibung

Die vorliegende Erfindung betrifft ein Futtergefäss für Pferde nach dem Oberbegriff des Patentanspruches 1.

Pferde sind von Natur aus Grasfresser mit einem verhältnismässig kleinen Magen und verbringen deshalb in der Freiheit einen grossen Teil ihrer Zeit mit Fressen. Mit der Domestikation und insbesondere der Stallhaltung, bei der nur noch zwei- bis fünfmal täglich gefüttert wird, hat der Mensch dem Pferd die Zeit zum Fressen verkürzt. Durch die Gabe von konzentrierter Nahrung, wie Getreide oder Kraftfutter, wird die Zeit für die Nahrungsaufnahme weiter reduziert. Das zu schnelle Fressen der genannten konzentrierten Nahrung führt bei vielen Pferden zu Verdauungsbeschwerden, insbesondere zu den gefürchteten Koliken. Eine weitere unerwünschte Nebenwirkung der zeitlich verkürzten Nahrungsaufnahme sind das Nagen an Stalleinrichtungen und ähnliche Unsitten wie Weben oder Koppen, welche die Tiere aus Langeweile annehmen.

Aus dem Stand der Technik sind verschiedene Einrichtungen bekannt, die alle zum Ziel haben, dem Pferd sein Futter, insbesondere Getreideprodukte oder Kraftfutter, über längere Zeit verteilt in kleinen Mengen zuzuführen. Derartige Vorrichtungen dosieren das Futter nach Gewicht oder Volumen und transportieren es kontinuierlich oder intermittierend in einen Bereich, in dem es vom Pferd gefressen werden kann. Dazu enthalten die Vorrichtungen Förderbänder oder Förderschnecken, die mit entsprechenden Antrieben und Steuerungen ausgestattet sind.

Der vorliegenden Erfindung liegt die Aufgabe zugrunde, ein Mittel vorzuschlagen, mit dem die Aufnahme von konzentrierter Nahrung wie Getreideprodukte oder Kraftfutter durch ein Pferd wirkungsvoll verzögert werden kann, ohne dass dazu Antriebs- und Steuerungsmittel benötigt werden. Diese Aufgabe wird durch ein Futtergefäss mit den kennzeichnenden Merkmalen des Patentanspruches 1 gelöst. Durch das auf dem Futter aufliegende flächige Element wird das Pferd daran gehindert, direkt in das Futter zu beissen und dieses in kurzer Zeit aufzufressen. Durch die im flächigen Element vorhandenen Öffnungen dringt immer nur ein Teil des Futters nach oben, wo es vom Pferd mit Lippen und Zunge aufgenommen wird.

Die Ausführungsart gemäss Anspruch 2 mit einer Lochplatte als flächiges Element lässt sich besonders einfach und kostengünstig herstellen.

Die Grösse und Form der Öffnungen kann je nach Grösse und Beschaffenheit der Futterpartikel angepasst werden. Ein flächiges Element in Form eines Maschengitters, wie es die Ausführungsart gemäss Anspruch 3 vorsieht, eignet sich besonders für Kraftfutter, das die Form von sogenannten Pellets hat.

Ein mit dem flächigen Element verbundener Führungsrahmen gemäss Anspruch 4 gewährleistet, dass das Pferd das flächige Element nicht abkippen und entfernen oder sich daran verletzen kann.

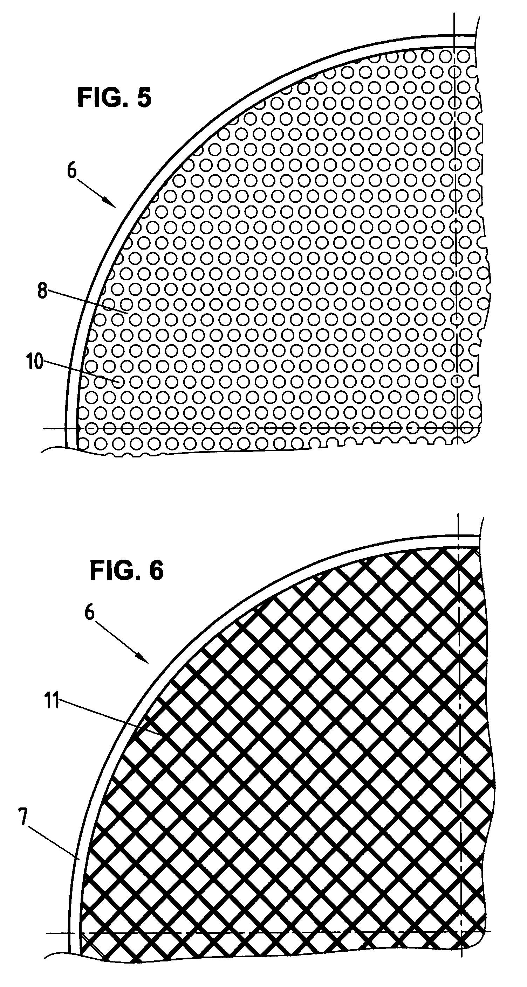

Ein kreiszylindrischer Querschnitt des Behälters, wie ihn die Ausführungsart gemäss Figur 5 vorsieht, ist nicht nur herstellungstechnisch besonders günstig, sondern ermöglicht dem Pferd auch besser, das Gefäss leerzufressen als dies bei einem Behälter mit eckigem Querschnitt der Fall wäre.

Die Erfindung wird anschliessend anhand von Ausführungsbeispielen unter Bezugnahme auf die beiliegenden Zeichnungen näher erläutert. Es zeigen:
Fig. 1 eine perspektivische, teilweise geschnittene Ansicht einer Ausführungsart des erfindungsgemässen Futtergefässes,
Fig. 2 eine geschnittene Ansicht der Ausführungsart gemäss Fig. 1,
Fig. 3 einen Teil einer geschnittenen Ansicht einer weiteren Ausführungsart,
Fig. 4 einen vergrösserten Ausschnitt aus Fig. 2 bzw. 3,
Fig. 5 und 6 je eine Draufsicht auf eine Ausführungsart des flächigen Elementes und
Fig. 7 eine Einzelheit der Befestigung des flächigen Elementes

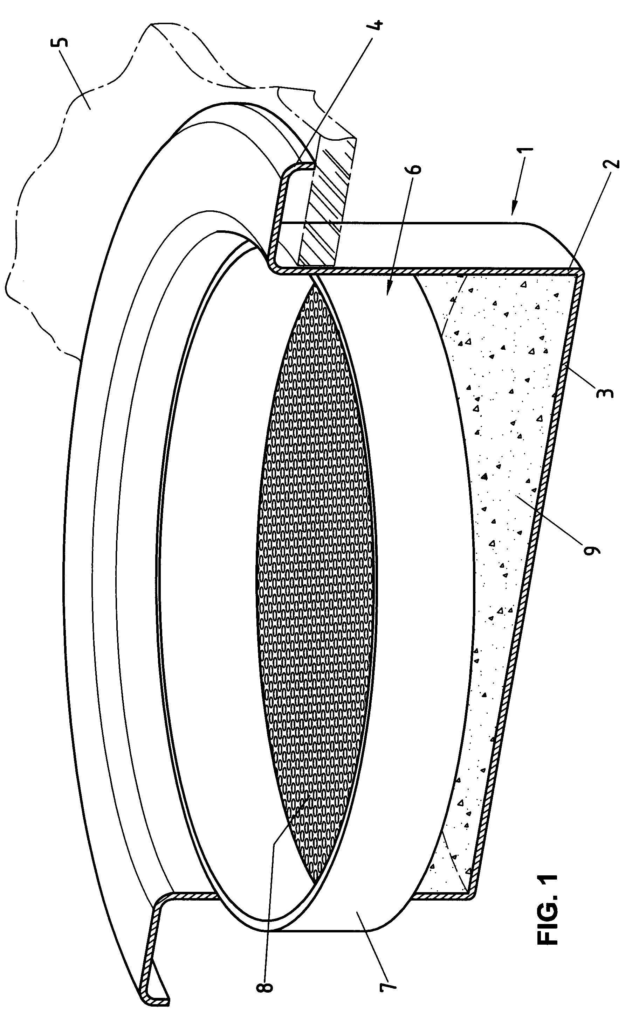

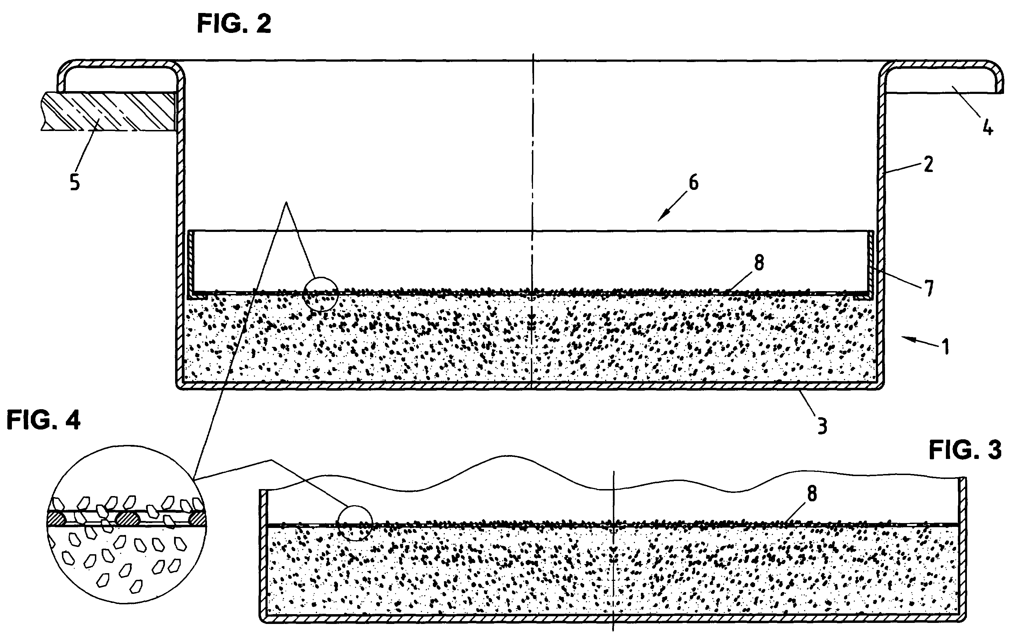

In Fig. 1 ist mit 1 ein Behälter bezeichnet, welcher aus Seitenwänden 2, einem Boden 3 und einem breiten oberen Rand 4 besteht. Der Behälter ist vorzugsweise aus korrosionsbeständigem Blech durch Tiefziehen hergestellt, er könnte aber auch aus einem Kunststoff bestehen und durch Spritzgiessen hergestellt sein. Im vorliegenden Beispiel ist der Behälter in eine Öffnung einer Halteplatte 5 eingesetzt, welche ihrerseits Teil eines am Boden stehenden Kastens oder Ständers sein kann. Diese Gestaltung hat den Vorteil, dass das Pferd das Futtergefäss nicht umwerfen kann. Alternativ kann die Halteplatte 5 in eine Futterkrippe eingesetzt sein. Der obere Rand 4 des Behälters 1 ist vorzugsweise wie in den Figuren 1 und 2 gezeigt umgebogen, so dass ihn das Pferd nicht mit seinen Zähnen ergreifen kann und sich auch nicht am Rand verletzen kann.

Im Inneren des Behälters, durch die Bezugszahl 9 angedeutet, befindet sich Futter, beispielsweise Getreidekörner oder -Flocken oder Kraftfutter-Pellets. Dieses Futter ist von oben durch ein flächiges Element 8 bedeckt, welches im vorliegenden Beispiel aus einem Lochblech besteht. Das flächige Element 8 könnte aber auch als eine mit Öffnungen 10 versehene Kunststoffplatte ausgebildet sein. Dieses auf dem Futter aufliegende flächige Element 8 hindert das Pferd daran, direkt in das im Behälter vorhandene Futter zu beissen und es in kurzer Zeit aufzufressen. Durch die Öffnungen 10 im flächigen Element 8 treten nur einzelne Teile des Futters an die Oberfläche, wo sie vom Pferd mit Lippen und Zunge aufgenommen werden. Das Eigengewicht des flächigen Elementes 8 und der durch das Pferd darauf ausgeübte Druck führen dazu, dass stets neue Futterbestandteile durch die Öffnungen 10 an die Oberfläche dringen. Das flächige Element 8 ist vorzugsweise an einem Führungsrahmen 7 befestigt und bildet mit diesem zusammen einen Einsatz 6.

Fig. 2 zeigt einen Querschnitt durch das Futtergefäss gemäss dem Ausführungsbeispiel nach Fig. 1. In dieser Figur ist besonders deutlich der Führungsrahmen 7 zu sehen, dessen Höhe so bemessen ist, dass der Einsatz 6 im zylindrischen Behälter nicht verkanten kann. Auch ist in dieser Figur sichtbar, wie einzelne Partikel des Futters durch die Öffnungen 10 im flächigen Element 8 nach oben dringen.

Fig. 3 zeigt in ähnlicher Darstellung wie Fig. 2 ein anderes Ausführungsbeispiel, bei dem auf den Führungsrahmen verzichtet wurde.

Der in Fig. 4 gezeigte Querschnitt durch das flächige Element veranschaulicht, dass die Kanten der Öffnungen 10 im flächigen Element gebrochen oder gerundet sind, damit sich das Pferd beim Fressen nicht verletzen kann.

In Fig. 5 ist ein Ausführungsbeispiel des Einsatzes 6 dargestellt, bei dem das flächige Element 8 eine Lochplatte, beispielsweise ein Lochblech ist. Die Löcher 10 können beispielsweise rund sein und einen Durchmesser von ca. 14 mm aufweisen, wodurch sich dieser Einsatz besonders für körniges Getreide und auch für Flocken, beispielsweise Haferflocken, eignet. Die optimale Form und Abmessungen der Öffnungen 10 kann für jedes Futter anders sein, je nach Form und Grösse der Futterpartikel.

Der Einsatz gemäss Fig. 6 ist mit einem Maschengitter 11 als flächiges Element ausgestattet. Ein solcher Einsatz eignet sich besonders für die Verwendung mit Kraftfutter-Pellets, wobei die Maschenweite grösser ist, als der Lochdurchmesser beim Ausführungsbeispiel nach Fig. 5. Ein Maschengitter hat darüber hinaus den Vorteil, dass es flexibler ist als eine Lochplatte und sich dadurch besser an die Oberfläche des im Behälter vorhandenen Futters anpasst. Eine maximale Flexibilität erreicht man mit einem Netz. Das Maschengitter oder das Netz kann aus einem beliebigen Filament bestehen, beispielsweise aus Draht oder Kunststoff.

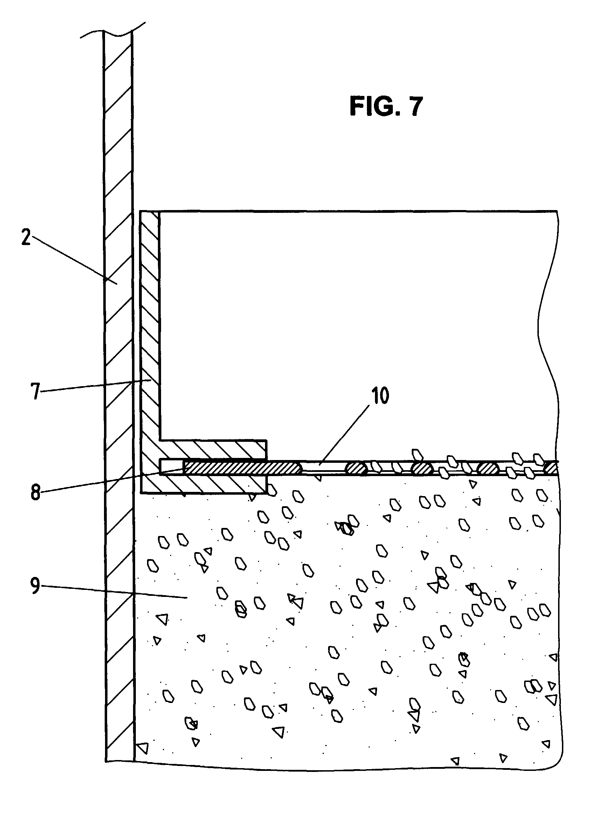

Fig. 7 zeigt ein flächiges Element 8, insbesondere eine Lochplatte, die am Rand des Führungsrahmens 7 mit radialem und axialem Spiel befestigt ist. Dadurch kann die Lochplatte während des Fressens durch das Maul des Pferdes auf dem Futter verschoben werden, wodurch die Futterteile leichter durch die Öffnungen 10 hindurch gearbeitet werden können. Damit sich im Rand keine Futterpartikel verklemmen können, weist der äusserste Bereich des flächigen Elementes keine Öffnungen auf.

## Patentansprüche

1. Futtergefäss für Pferde, bestehend aus einem oben offenen Behälter (1) zur Aufnahme des Futters, gekennzeichnet durch ein flächiges Element (8, 11), das dazu bestimmt ist, von oben auf das im Behälter vorhandene Futter (9) gelegt zu werden und das mehrere über seine Fläche verteilte Öffnungen (10) aufweist.

2. Futtergefäss nach Anspruch 1, dadurch gekennzeichnet, dass das flächige Element eine Lochplatte (8) ist.

3. Futtergefäss nach Anspruch 1, dadurch gekennzeichnet, dass das flächige Element ein Maschengitter oder ein Netz (11) ist.

4. Futtergefäss nach einem der vorhergehenden Ansprüche, dadurch gekennzeichnet, dass das flächige Element an einem Führungsrahmen (7) gehalten ist, der mit Spiel ins Innere des Behälters passt.

5. Futtergefäss nach Anspruch 4, dadurch gekennzeichnet, dass das flächige Element so am Führungsrahmen gehalten ist, dass es in seiner Ebene verschiebbar ist.

6. Futtergefäss nach einem der vorhergehenden Ansprüche, dadurch gekennzeichnet, dass der Behälter (1) einen kreiszylindrischen Querschnitt aufweist.
